Europäisches Patentamt

European Patent Office

Office européen des brevets

(19)

(11) EP 0 917 363 A1

(12) EUROPEAN PATENT APPLICATION

(43) Date of publication:
19.05.1999 Bulletin 1999/20

(51) Int. Cl.⁶: **H04N 7/00**, H04N 7/36

(21) Application number: 97830605.8

(22) Date of filing: 17.11.1997

(84) Designated Contracting States:
AT BE CH DE DK ES FI FR GB GR IE IT LI LU MC
NL PT SE
Designated Extension States:
AL LT LV MK RO SI

(71) Applicant:
STMicroelectronics S.r.l.
20041 Agrate Brianza (Milano) (IT)

(72) Inventors:
• Zuccaro, Amedeo
28010 Fosseno di Nebbiuno (IT)

• Pau, Danilo
20099 Sesto San Giovanni (IT)
• Piccinelli, Emiliano
20052 Monza (IT)

(74) Representative:
Pellegri, Alberto et al
c/o Società Italiana Brevetti S.p.A.
Via Puccini, 7
21100 Varese (IT)

(54) **Motion estimator algorithm and system's architecture**

(57) A motion estimator operating on a recursive mode reduces remarkably the number of operations per pixels required by the particular coding process being implemented, typically the coding according to the MPEG standard. The method is based on the correlation existing among motion vectors associated to macroblocks in a homologous position in temporally adjacent images and also associated to macroblocks belonging to the same picture and spatially adjacent to the current macroblock being processed.

By admitting this double correlation the calculation burden is greatly reduced.

FIGURE 4

EP 0 917 363 A1

**Description**

FIELD OF THE INVENTION

This invention relates to the algorithms and systems of motion estimation in processing video images and more in particular to an algorithm and an architecture of a motion estimator for implementing video coders compliant with the MPEG-2 standard.

DISCUSSION OF THE STATE OF THE ART ON MOTION ESTIMATION

The concept at the base of motion estimation is the following: a set of pixels of a field of a picture may be placed in a position of the subsequent picture obtained by translating the preceding one. Of course, these transpositions of objects may expose to the video camera parts that were not visible before as well as changes of their shape (e.g. Zooming and the like).

The family of algorithms suitable to identify and associate these portions of images is generally referred to as "motion estimation". Such an association permits to calculate the portion of difference image by removing the redundant temporal information making more effective the subsequent process of compression by transformation, quantization and entropic coding.

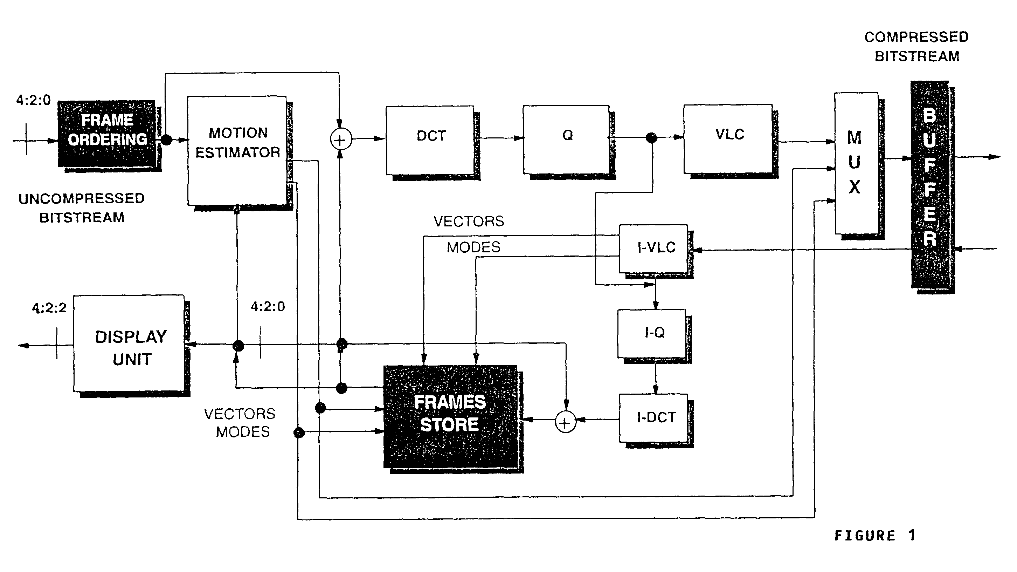

Such a method finds in the standard MPEG-2 a most typical example. A typical block diagram of a video MPEG-2 coder is depicted in Fig. 1.

Such a system is made up of the following functional blocks:

1) **Field ordinator**

This blocks is composed of one or several field memories outputting the fields in the coding order required by the MPEG standard. For example, if the input sequence is I B B P B B P etc., the output order will be I P B B P B B ... .

- I (Intra coded picture) a field and/or a semifield containing temporal redundance;
- P (Predicted-picture) is a field and/or semifield from which the temporal redundance in respect to the preceding I or P (previously co-decoded) has been removed;
- B (Biredictionally predicted-picture) is a field and/or a semifield whose temporal redundance in respect to the preceding I and subsequent P (or preceding P and successive P) has been removed (in both cases the I and P pictures must be considered as already co/decoded).

Each frame buffer in the format 4:2:0 occupies the following memory space:

| standard PAL | 720 x 576 x 8 for the luminance (Y) | = 3,317,760 bit |
| | 360 x 288 x 8 for the chrominance (U) | = 829,440 bit |
| | 360 x 288 x 8 for the chrominance (V) | = 829,440 bit |
| | total Y + U + V | = 4,976,640 bit |
| standard NTSC | 720 x 480 x 8 for the luminance (Y) | = 2,764,800 bit |
| | 360 x 240 x 8 for the chrominance U | = 691,200 bit |
| | 360 x 240 x 8 for the chrominance V | = 691,200 bit |
| | total Y + U + V | = 4,147,200 bit |

2) **Motion Estimator**

This is the block that removes the temporal redundance from the P and B pictures.

3) **DCT**

This is the block that implements the cosene-discrete transform according to the MPEG-2 standard.

The 1 picture and the error pictures P and B are divided in 8*8 blocks of pieces Y, U, V on which the DCT transform is performed.

### 4) Quantizer Q

An 8*8 block resulting from the DCT transform is then divided by a quantizing matrix in order to reduce more or less drastically the magnitude of the DCT coefficients. In such a case, the information associated to the highest frequencies, less visible to human sight, tends to be removed. The result is reordered and sent to the successive block.

### 5) Variable Length Coding (VLC)

The codification words output from the quantizer tend to contain null coefficients in a more or less large number, followed by nonnull values. The null values preceding the first nonnull value are counted and the count figure constitutes the first portion of a codification word, the second portion of which represents the nonnull coefficient.

These paired values tend to assume values more probable than others. The most probable ones are coded with relatively short words (composed of 2, 3 or 4 bits) while the least probable are coded with longer words. Statistically, the number of output bits is less than in the case such methods are not implemented.

### 6) Multiplexer and Buffer

Data generated by the variable length coder, the quantizing matrices, the motion vectors and other syntactic elements are assembled for constructing the final syntax contemplated by the MPEG-2 standard. The resulting bitstream is stored in a memory buffer, the limit size of which is defined by the MPEG-2 standard and cannot be overflown. The quantizer block Q attends to the respect of such a limit, by making more or less drastic the division of the DCT 8*8 blocks depending on how far to the filling limit of such a memory buffer the system is and on the energy of the 8*8 source block taken upstream of the motion estimation and DCT transform process.

### 7) Inverse Variable Length Coding (I-VLC)

The variable length coding functions specified above are executed in an inverse order.

### 8) Inverse Quantization (IQ)

The words output by the I-VLC block are reordered in the 8*8 block structure, which is multiplied by the same quantizing matrix that was used for its precedent coding.

### 9) Inverse DCT (I-DCT)

The DCT transform function is inverted and applied to the 8*8 block output by the inverse quantization process. This permits to pass from the domain of spatial frequencies to the pixel domain.

### 10) Motion Compensation and Storage

At the output of the I-DCT block may alternatively be present:

- a decoded I picture (or semipicture) that must be stored in a respective memory buffer for removing the temporal redundance in respect thereto from subsequent P and B pictures;
- a decoded prediction error picture (semipicture) P or B that must be summed to the information removed previously during the motion estimation phase. In case of a P picture, such a resulting sum, stored in dedicated memory buffer is used during the motion estimation process for the successive P pictures and B pictures.

These field memories are generally distinct from the field memories that are used for re-arranging the blocks.

### 11) Display Unit

This units converts the pictures from the format 4:2:0 to the format 4:2:2 and generates the interlaced format for displaying the images.

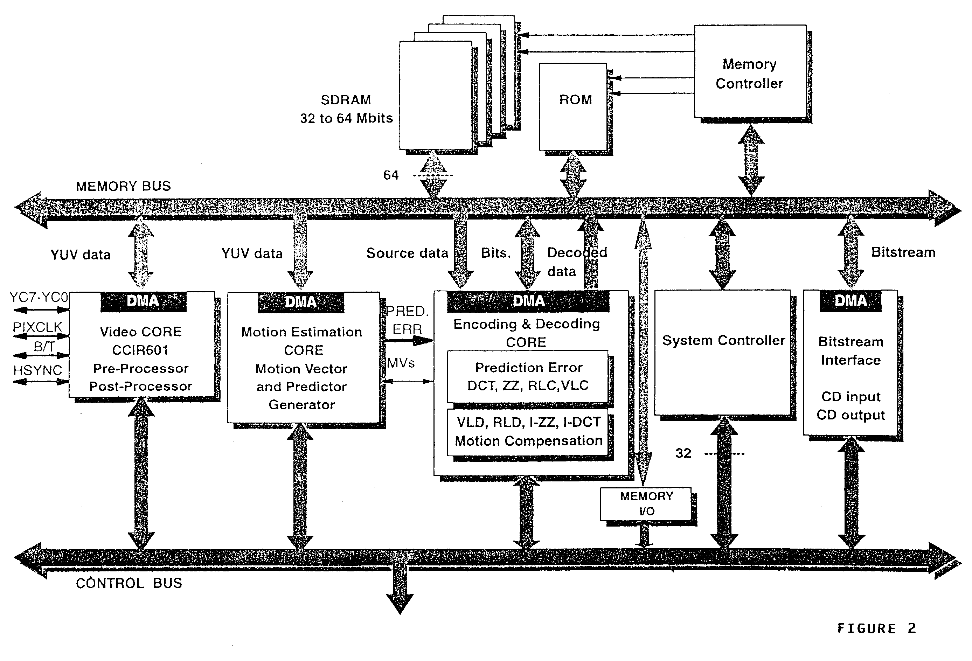

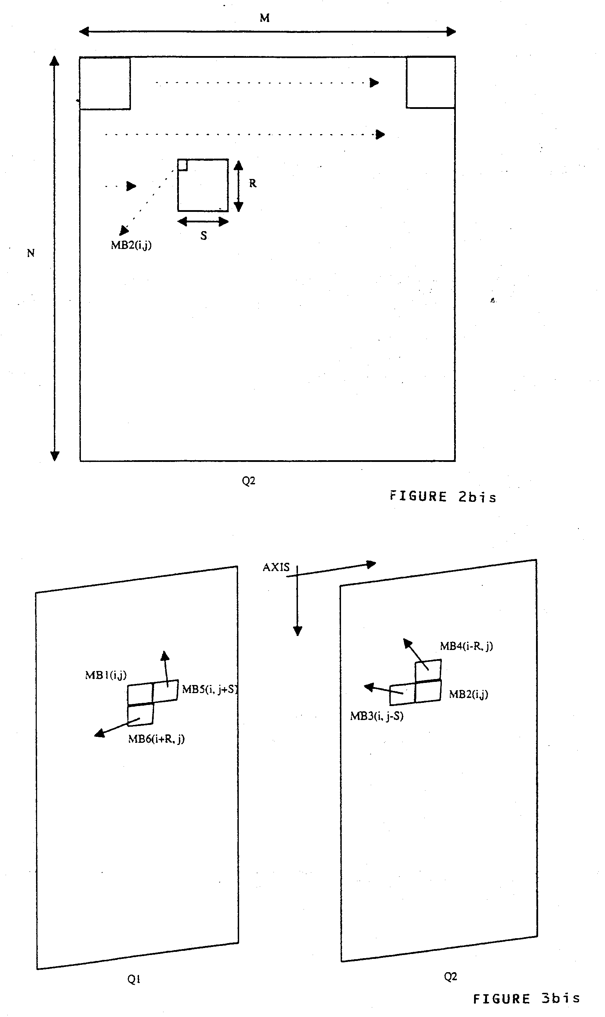

The arrangement of the functional blocks depicted in Fig. 1, in an architecture implementing the above-described coder is shown in Fig. 2. A distinctive feature is in the fact that the field rearrangement block (1), the block (10) for storing the already reconstructed P and I pictures and the block (6) for storing the bitstream produced by the MPEG-2 coding, are integrated in memory devices external to the integrated circuit of the core of the coder, to which the decoder accesses through a single interface, suitably managed by an integrated controller.

Moreover, the preprocessing block converts the received images from the format 4:2:2 to the format 4:2:0 by filtering and subsampling of the chrominance. The post-processing block implements a reverse function during the decoding and displaying phase of the images.

The coding phase employs also the decoding for generating the reference pictures in order to make operative the motion estimation. For example, the first I picture is coded, thence decoded, stored (as described in paragraph 10)) and used for calculating the prediction error that will be used to code the subsequent P and B pictures.

The play-back phase of the data stream previously generated by the coding process uses only the inverse functional blocks (I-VLC, I-Q, I-DCT, etc.), never the direct functional blocks.

From this point of view, it may be said that the coding and the decoding implemented for the subsequent displaying of the images are nonconcurrent processes within the integrated architecture.

DESCRIPTION OF THE NONEXHAUSTIVE SEARCH MOTION ESTIMATOR

Let's consider two fields of an image (the same applies also to semifields of the image), Q1 at the instant t and the subsequent field Q2 at the instant t+T and be T the field period (1/25 sec. for the PAL standard, 1/30 sec. for the NTSC standard). Q1 and Q2 are constituted by luminance and chrominance components. Let's suppose to apply the motion estimation only to the most energetic and therefore richer of information component, such as the luminance, representable as a matrix of N lines and M columns. Let's divide Q1 and Q2 in portions called macroblocks, each of R lines and S columns.

The results of the divisions N/R and M/S must be two integer numbers, not necessarily equal to each other.

Let's Mb2(i,j) be a macroblock defined as the reference macroblock belonging to the field Q2 and whose first pixel, in the top left part thereof is at the intersection between the i-th line and the j-th-column.

The pair (i,j) is characterized by the fact that i and j are integer multiples of R and S, respectively.

Fig. 2bis shows how said reference macroblock is positioned in the Q2 picture, while the horizontal dash line arrows indicate the scanning order used for identifying the various macroblocks on Q2.

Let's suppose to project MB2(i,j) on the field Q1, obtaining MB1(i,j).

Let's define on Q1 a search window having its center at (i,j) and composed of the macroblocks Mbk[l,p] where k is the macroblock index. The k-th macroblock is identified by the coordinates (e,f), such that:

$$- p \leq (e - i) \leq + p \qquad - q \leq (f, j) \leq + q$$

the indices e and f being integer numbers.

Each of said macroblock is said to be a predictor of MB2(i,j).

For example, if p=8 and q=16, the number of predictors is $(2p + 1) * (2q + 1) = 561$ .

For each predictor, the norm L1 in respect to the reference macroblock is calculated; such a norm is equal to the sum of the absolute values of the differences between homologues pixels belonging to MB2(i,j) and to MBk(l,p). To each sum contribute R*S values, the result of which is called distortion.

Therefore $(2p + 1) * (2q + 1)$ values of distortion are obtained, among which the minimum value is chosen, thus identifying a prevailing position (**e\*f\***).

The motion estimation process is not yet terminated because in the vicinity of the prevailing position, a grid of pixels is created for interpolating those that constitute Q1.

For example if Q1 is composed of:

..................

p31 p32 p33 p34 p35 ....

p41 p42 p43 p44 p45.....

..................

After interpolation, the following is obtained:

..............

p31    I1    p32.....

I2    I3    I4......

p41    I5    p42.....

..............

where

$I1 = (p31 + p32) / 2$
$I2 = (p31 + p41) / 2$
$I3 = (p31 + p32 + p41 + p42) / 4$
$I4 = (p32 + p42) / 2$
$I5 = (p41 + p42) / 2$

Let's suppose to apply the above noted algorithm in the vicinity of the prevailing position by assuming, for example, p=q=1 .

In such a case, the number of predictors is equal to 8 and are constituted by pixels that are interpolated starting from the pixels of Q1.

Let's identify the predictor with minimum distortion in respect to MB2(i,j).

The predictor more similar to MB2(i,j) is identified by the coordinates of the prevailing predictor through the above noted two steps of the algorithm.

The first step tests only whole positions while the second the sub-pixel positions.

The vector constituted by the difference components between the position of the prevailing predictor and of MB2(j,j) is defined as the motion vector and describes how MB2(i,j) derives from a translation of a macroblock similar to it in the preceding field.

It should be noted that other measurements may be used for establishing if two macroblocks are similar to each other. For example, the sum of the quadratic values of the differences (norm L2). Moreover, the sub-pixel search window may be wider than what specified in the above example. All this further increases the complexity of the motion estimator.

In the example described above, the number of executed operations per pixel is equal to 561+8=569, wherein each operation includes a difference between two pixels + an absolute value identification + a storage of the calculated result between the pair of preceding pixels of the same macroblock.

This means that for identifying the optimum predictor 569*R*S parallel operators are required (at the pixel frequency of 13.5 MHz). By assuming R=S=16  as defined by the standard MPEG-2, the number of operations required is 569*16*16=145,664.

Each operator may function on a time division basis on pixels belonging to different predictors, therefore if each of them works at a frequency 4*13.5=54 MHz, the number of operators required would be 145,664/4=36,416.

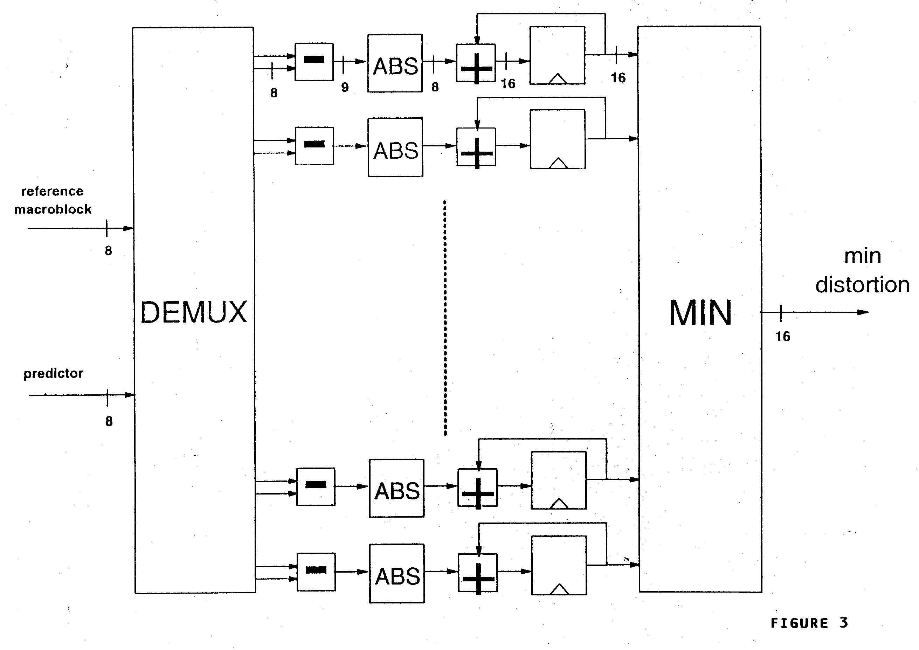

A high level block diagram of a motion estimator of the known type based on an exhaustive search technique is depicted in Fig. 3, wherein the DEMUX block convey the data coming from the field memory to the operators and the MIN block operates on the set of distortion values.

PURPOSE AND SUMMARY OF THE INVENTION

The object of the present invention is to reduce the complexity of a motion estimator as used for example in an MPEG-2 video coder.

As an illustration of an efficient implementation of the method and architecture of the motion estimator of the present invention, a coder for the MPEG-2 standard will be taken into consideration.

By the novel motion estimator of the invention is possible for example to employ only 6,5 operations per pixel in order to find the best predictor of the portion of picture currently being subjected to motion estimation, for an SP@ML compressed video sequence of either PAL or NTSC type.

By contrast, the best result that may be obtained with a motion estimator of the prior art, would imply the execution of 569 operations per pixel beside the drawback of requiring a more complex architecture.

The method and relative architecture of motion estimation of the present invention, are defined in the appended claims.

The method of the invention implies a slight loss of quality of the reconstructed video images for the same compression ratio. However, such a degradation of the images is practically undetectable to human sight because the artifaxes are distributed in regions of the images having a substantial motion content, the details of which practically pass unnoticed by the viewer.

DESCRIPTION OF A RECURSIVE ESTIMATOR OF THE INVENTION

The number of operations per pixels required by the coding process may be remarkably reduced once the use of vectors calculated by the motion estimation process for macroblocks, spatially and temporally in the vicinity of the current macroblock is admitted.

The method herein disclosed is based on the correlation that exists among motion vectors associated to macroblocks in a homologous position in temporally adjacent images. Moreover, also the motion vectors associated to macroblocks belonging to the same picture, spatially adjacent to the current one may represent, with small errors, the motion of the current macroblock.

The process of motion estimation of the invention meets with the following requisites:

- the integration of the required number of operators necessary for implementing the method of motion estimation together with auxiliary structures, such as buffer memories for allowing the reuse of precalculated vectors, must be markedly less onerous than that of motion estimators that do not avail themselves of the method of the invention;
- the loss of quality of the reconstructed images for a given compression ratio must be practically negligible, compared to motion estimators that do not implement the method of the invention.

In the ensuing description of the novel method of motion estimation, reference is made to the same pictures Q1 and Q2 as in the above description of the known method of motion estimation by exhaustive search. In particular, it is supposed to have subjected the picture Q1 to motion estimation in respect of the preceding picture (Q0) and to have therefore associated to the picture Q1 a motion field consisting of a vector per each macroblock. It is also assumed to be searching in the picture Q1 the best predictor of the macroblock MB2(i,j) and to have already subjected to such a process all the macroblocks of Q2 that precede the current macroblock.

According to Fig. 3bis, let's consider:

- mv_MB5(i,j+S) is the motion vector associated to the macroblock belonging to Q1 and identified by the coordinates (i,j+S)
- mv_MB6(i+R,j) is the motion vector associated to the macroblock belonging to Q1 and identified by the coordinates (i+R,j)
- mv_MB3(i,j-S) is the motion vector associated to the macroblock belonging to Q2 and identified by the coordinates (i,j-S)
- mv_MB4(i-R,j) is the motion vector associated to the macroblock belonging to Q2 and identified by the coordinates (i-R,j)

Let's consider, by way of example, to employ the above vectors for identifying, during a first step, four predictors starting from the projection of MB2 on Q1 and that the prevailing predictor be identified by using the norm L1 (or the norm L2, etc.).

Generally, it is possible to use more than two predictors (belonging to Q1) and also in a different number from those belonging to Q2. The above noted example has proven itself very effective during simulation.

The norm associated to the prevailing predictor is thereafter compared with precalculated thresholds derived from statistical considerations.

Such thresholds identify three subsets, each composed of F pairs of vectors, wherein each pair, for example, is composed of vectors having components equal in terms of absolute value but opposite in sign. In the second step, such F pairs are summed to the vector that represents the prevailing predictor, identifying others 2*F predictors among which there may be also sub-pixels positions.

The prevailing predictor in the sense of the norm is the predictor to be subtracted from MB2(i,j).

It must be remarked the fact that in such a method, the norm is calculated starting from the result obtained by subsampling the macroblock according to a quincux scheme, or by interpolating the pixels of Q1 for generating predictor macroblocks disposed in sub-pixels positions of Q1.

The quincux grid is obtained by eliminating a pixel every two from the macroblock according to the following scheme:

| source macroblock | subsampled macroblock | | | | | | |
|---|---|---|---|---|---|---|---|
| A1 A2 A3 A4 A5 A6 ..... | A1 | | | A3 | | A5 | |
| B1 B2 B3 B4 B5 B6 ..... | | B2 | | | B4 | | B6 |
| C1 C2 C3 C4 C5 C6 ..... | C1 | | C3 | | | C5 | |

In this way, the operations necessary for calculating the norm are reduced by 50% compared to the case of an exhaustive search technique of a known motion estimator.

The method used for interpolating the pixels of Q1, thus generating the sub-pixels thereof, is for example the one used in the exhaustive search estimator of the prior art.

Finally, between the macroblock of Q2 with coordinates (e,f)=(0,0) and said prevailing predictor, a final predictor will be defined.

For example, the number of operations per pixel according to the above described method is equal to:

| - first step | 4 |
|---|---|
| - second step with F=4 | 8 |
| - coordinate position (i-0,j-0) | 1 |
| - partial total | 13 (without quincux subsampling) |
| - final total | 6,5(with quincux subsampling) |

In these conditions, the performance in terms of signal/noise ratio that is obtained is equivalent to that of the known exhaustive search estimator previously described, while the complexity of the hardware implementation is markedly reduced.

BRIEF DESCRIPTION OF THE DRAWINGS

The different aspects and advantages of the invention will become even more evident through the following description of an embodiment and by referring to the attached drawings, wherein:

**Figure 1** is a basic diagram of a video coder MPEG-2 MP@ML including the block called "motion estimator" which is the object of the present invention;

**Figure 2** shows the architecture of the coder MPEG-2 MP@ML of Fig. 1;

**Figure 2bis** is a reference scheme of the relative position of the macroblock taken into consideration in the description of the known method of motion estimation;

**Figure 3** is a block diagram of the motion estimator showing the operators that perform the calculation of the norm L1;

**Figure 3bis** is a reference scheme of the relative position of the macroblock of pixels taken into consideration in the example of calculation according to the invention;

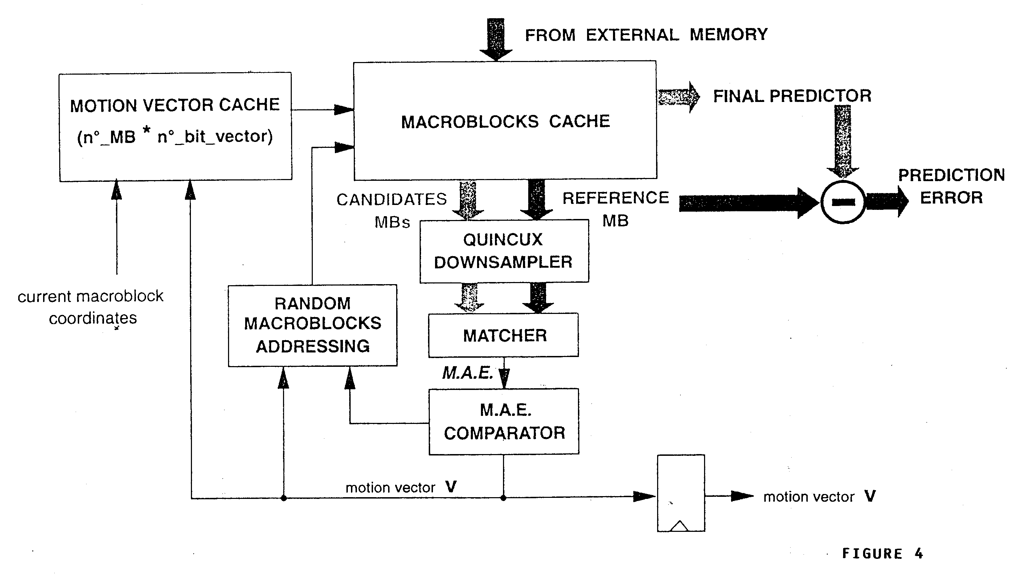

**Figure 4** shows the architecture of a recursive motion estimator made according to the present invention;

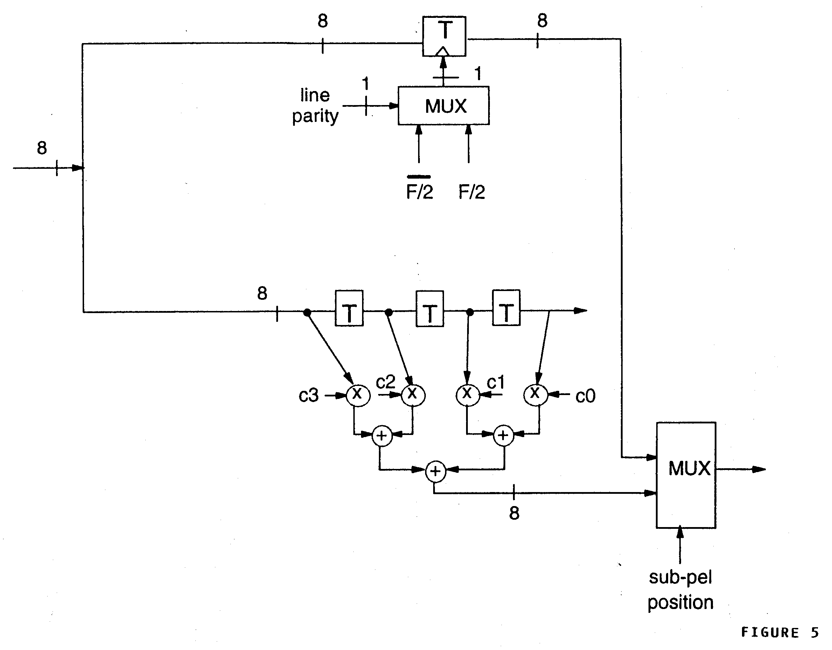

**Figure 5** is the diagram of a quincux subsampler and interpolator;

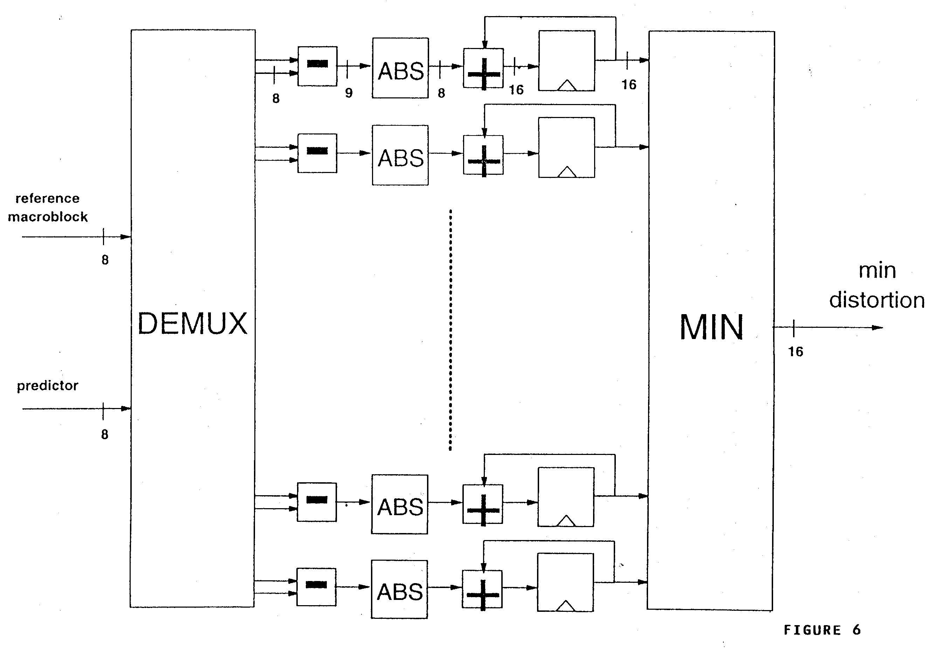

**Figure 6** shows the diagram of the calculator of the norm L1 among predictors and the reference macroblock;

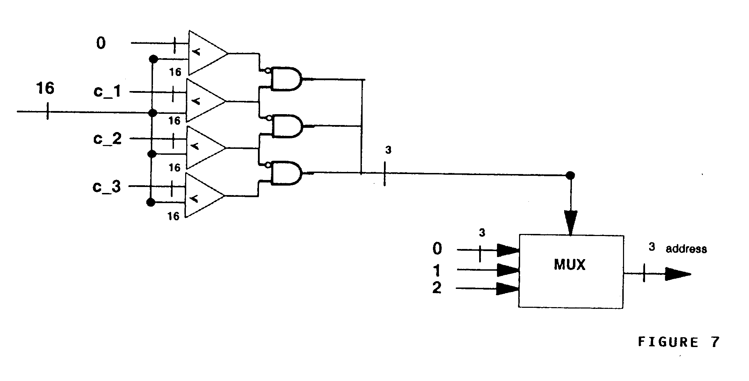

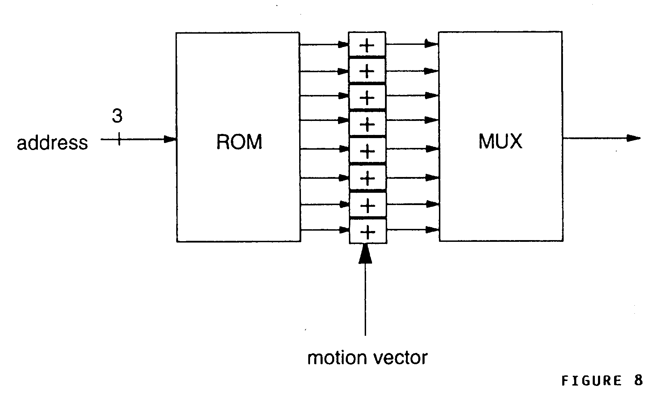

**Figure 7** shows the diagram of the block "comparator of M.A.E." for addressing the ROM contained in the diagram of Fig. 8;

**Figure 8** is the diagram of the block "random addressing of macroblocks".

ARCHITECTURE OF THE RECURSIVE MOTION ESTIMATOR OF THE INVENTION

A block diagram of the recursive motion estimator of the invention is depicted in Fig. 4.

In particular, a memory of $(N^*M)/(R^*S)$ cells (each of T bits) is present, containing the motion vectors associated to the macroblocks preceding the current one and disposed on the same field Q2 and on the preceding field Q1. Moreover, a memory for storing the predictors belonging to Q1 is also present. This memory has dimensions $G^*H^*R^*S^*8$ and permits to limit the number of accesses to the external memory, which would otherwise need to be accessed every time a predictor is required for feeding the motion estimator, thus incrementing sensibly the passband.

By referring again to the same example described above, let's consider the step 1 during which the four motion vectors are:

-   mv_MB5(i,j+S)
-   mv_MB6(i+R,j)
-   mv_MB3(i,j-S)
-   mv_MB4(i-R,j)

Depending on the position (i,j) of the macroblock which is being subjected to motion estimation and the reference macroblock, the motion vectors are acquired by the block "memory of the motion vectors" and are used for addressing the macroblock memory, from which said four macroblocks feed one at a time the quincux subsampling block. These subsampled macroblocks, eventually interpolated for defining the sub-pixel position, thereafter feed the block that calculated the norm L1 (or L2, etc.) between said predictor and the reference predictor. Said norm, by identifying the prevailing predictor of step 1 of the processing, permits to the M.A.E. comparator to address the ROM wherein vectors to be summed to the one associated to the prevailing predictor are stored.

The ROM is contained in the block called "random addressing of macroblocks", at the output of which are obtained the addresses that are used for singling out the predictors in the "macroblocks memory". These predictors feed the same blocks described in relation to the step 1. At the end of step 2, the motion vector V is obtained, and is stored in a register and made available to the coding process.

Finally, the predictor and the reference macroblock feed a subtractor, the final output of which is the prediction error that feeds the following MPEG-2 compression processing.

By observing the diagrams of Fig. 3 and of Fig. 6, showing the norm L1 calculators, according to the known technique and according to the invention, respectively, the number of operators functioning in parallel, is clearly less in the case of this invention. In practice, the implementation of Fig. 6 is markedly simpler than that of Fig. 3.

With reference to the scheme of Fig. 5, the quincux subsampler is formed by a plurality of 8-bit registers commanded by way of a multiplexer (mux), by two signals of same frequency but opposite phase. The interpolator is constituted by a plurality of T registers, which permits the access to the sampled pixels at different instants, making them available for the downstream blocks of multiplication and addition. The coefficients C1, C2, C3, C4 may for example take the following values, if applied to the source pixels p31, p32, p41, p42:

| p31 | p32 | p41 | p42 |
|-----|------|------|------|
| 1/2 | 1/2 | 0 | 0 ------- I1 |
| 1/2 | 0 | 1/2 | 0 ------- I2 |
| 0 | 0 | 1/2 | 1/2 ------- I5 |
| 0 | 1/2 | 0 | 1/2 ------- I4 |
| 1/4 | 1/4 | 1/4 | 1/4 ------- I3 |
| 0 | 0 | 0 | 0 ------- quincux subsampling implementation |

The multiplexer finally selects the output, depending on the type of predictor required.

With reference to diagram of Fig. 6, the circuit of calculation of the norm L1 among predictors and the reference macroblock is composed of a demultiplexer that conveys the predictors and the reference macroblock toward the appropriate operator. For example, if the macroblock has a 16*16 size, and by defining the norm L1 as the sum of the absolute values of the differences between homologous pixels (predictor/reference), the precision at the output of the subtractor block may be defined in 9 bits, in 8 bits the precision of the absolute value block and in 16 bits the precision of the accumulation block. The latter is constituted by an adder and a 16-bit register.

The outputs of the operators feed a block that calculates the minimum value, outputting the minimum value which is also called MAE (Mean Absolute Error).

With reference to the scheme of Fig. 7, the MAE must be comprised in one of the three subsets composed of the values:

- $0 \div c\_1$
- $c\_1 \div c\_2$
- $c\_2 \div c\_3$

as a consequence at the output is produced an address of the ROM contained in the block of Fig. 8.

The address produced by the block of Fig. 7 addresses a ROM which outputs 8 addresses, called "motion vectors", to be summed to the motion vector defined during step 1, as described above.

These sums are multiplexed for addressing the "macroblocks memory.

The embodiments and applications of the motion estimator of the invention are numerous, among these the following can be mentioned.

- The motion estimation may be implemented by extracting predictors from a temporally preceding picture and also from a temporally successive picture. If both estimations are implemented in parallel, replicas of the structure of Fig. 8, operating in parallel, may be employed. The use of replicas of the motion vector memory and of the macroblocks memory is also contemplated.
- Coders for recording on digital video disks also called DVD RAM.
- Camcorders.
- Digital coders even if not based on the MPEG-2 standard, where a phase of motion estimation is required.

## Claims

1.   A method of motion estimation from homologous fields or pictures of successive images for video coders, comprising dividing each picture of N lines and M columns to be subjected to motion estimation in a plurality (N/R)*(M/S) of reference macroblocks, each of R lines and S columns of pixels, defining for each of said reference macroblocks a set of P+Q+2*D predictor macroblocks of at least a component between the luminance and chrominance components disposed on the preceding picture, and wherein:

   1) P predictors are singled by the use of motion vectors associated to macroblocks preceding the reference macroblocks on the same picture according to a raster scanning, by projecting said vectors on the macroblock homologous to the reference macroblock and disposed on the preceding picture,

   2) Q predictors are singled by the use of motion vectors associated to macroblocks following the reference macroblock on the preceding picture according to a raster scanning, by projecting said vectors on the macroblock homologous the reference macroblock placed on the preceding picture,

   3) 2*D predictors are singled by the use of the motion vectors associated to P and Q predictor macroblocks as defined above and summed to integer and/or fractionary quantities predefined in look-up tables,

   4) calculating per each pair of macroblocks, composed of only one among the P or Q or 2*D predictors and the reference macroblock, the socalled L1 norm, said norm being the sum of the differences in absolute values between homologous pixels belonging to said pairs,

   5) identifying the minimum value of said norms and calculating the x and y components of the motion vector associated to the reference macroblock as the difference between the homologous coordinates of the first pixel, according to a raster scanning of the reference macroblock, and the predictor with minimum distortion,
      characterized in that the total number of operations is reduced by employing a recursive procedure based on the correlation existing among motion vectors associated to macroblocks adjacent to the reference macroblock during the processing of a picture and in that it comprises the steps of:

- storing the motion vectors associated to all the macroblocks of a picture, overwriting them one by one with the motion vectors associated to corresponding macroblocks of a following picture during the processing thereof and as said motion vectors are calculated in succession following a raster type of scanning of the macroblocks;

- using the stored motion vectors already calculated, associated to said P macroblocks and the stored motion vectors associated to said Q macroblocks, nonhomologous to said P macroblocks adjacent to the reference macroblock during the processing of the current picture for addressing P+Q predictor values.

2. The method of claim 1, further comprising the following steps:

- identifying the predictor macroblock with minimum distortion among all the above noted P+Q predictor value;

- comparing the so-called L1 norm value associated to said minimum distortion predictor with a plurality of T precalculated thresholds, derived from statistical considerations, identifying a plurality D of pairs of vectors, each pair constituted by vectors having components of identical absolute value but of opposite sign;

- summing said pairs of vectors to the vector associated to the said minimum distortion predictor, identifying a number 2*D of predictors, double in respect to the number of said pairs of vectors, by including intermediate or sub-pixel positions;

- calculating said L1 norm value for each pair of macroblocks constituted by one predictor macroblock belonging to said 2*D set and said reference macroblock;

- identifying the minimum distortion macroblock among all the 2*D macroblocks;

- calculating the motion vector according to point 1) of claim 1.

3. The method of any one of the preceding claims, characterized in that said L1 norm value is calculated from the result obtained by subsampling the macroblock according to a quincux grid.

4. The method according to any one of the claims 1 and 2, wherein the L1 norm value is calculated by interpolating the pixels of the predictor by generating a new predictor in a sub-pixel position in respect to the plurality of positions associated to the preceding picture.

5. A recursive motion estimator for generating a motion vector (V) storable in an output register, characterized by comprising

a first memory (MOTION VECTOR CACHE) containing (N/R)*(M/S) vectors of motion associated to all the macroblocks in which a whole picture is divided, overwritten continuously with the values that are successively calculated for the macroblocks of the current picture;

a second memory (EXTERNAL MEMORY) containing the pixels of a preceding whole picture and of the current picture being processed;

a third memory of macroblocks (MACROBLOCKS CACHE) storing the predictors relative to at least P+Q+2*D macroblocks even nonadjacent to a so-called reference macroblock being processed, addressable by vectors selected in said first memory;

a subsampling block (QUINCUX DOWNSAMPLER) sequentially fed with the predictor values of said P+Q+2*D macroblocks coming from said third memory and with the pixel values of the reference macroblock;

a calculation block of the L1 norm value (MATCHER) calculating the distortion between the reference macroblock and the P+Q+2*D predictor macroblocks;

a comparator (M.A.E.) outputting the minimum value of said L1 norm values output by said calculation block (MATCHER);

a fourth read-only memory (RANDOM MACROBLOCKS ADDRESSING) addressed by said comparator block (M.A.E.) outputting the individuation addresses of the predictors of a number of macroblock predictors equal in number to P and/or Q and/or 2*D existing on said third memory (MACROBLOCK CACHE);

means capable of processing said predictors and producing a prediction error datum.

FIGURE 1

FIGURE 2

M

N

R

S

MB2(i,j)

Q2

FIGURE 2bis

AXIS

MB1(i,j)

MB5(i, j+S)

MB6(i+R, j)

MB4(i-R, j)

MB2(i,j)

MB3(i, j-S)

Q1

Q2

FIGURE 3bis

FIGURE 3

EP 0 917 363 A1

FIGURE 4

FIGURE 5

17

FIGURE 6

FIGURE 7

FIGURE 8

**European Patent Office**

## EUROPEAN SEARCH REPORT

Application Number

EP 97 83 0605

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | HSIEH C H ET AL: "MOTION ESTIMATION ALGORITHM USING INTERBLOCK CORRELATION" ELECTRONICS LETTERS, vol. 26, no. 5, 1 March 1990, page 276/277 XP000105589 | 1,2 | H04N7/00 H04N7/36 |
| A | * the whole document * | 3-5 | |
| X | HAAN DE G ET AL: "TRUE-MOTION ESTIMATION WITH 3-D RECURSIVE SEARCH BLOCK MATCHING" IEEE TRANSACTIONS ON CIRCUITS AND SYSTEMS FOR VIDEO TECHNOLOGY, vol. 3, no. 5, 1 October 1993, pages 368-379, XP000414663 | 1 | |
| A | * paragraph IV * * figure 6 * | 2-5 | |
| A | FENG J ET AL: "ADAPTIVE BLOCK MATCHING MOTION ESTIMATION ALGORITHM FOR VIDEO CODING" ELECTRONICS LETTERS, vol. 31, no. 18, 31 August 1995, page 1542/1543 XP000530941 * the whole document * | 1-5 | |
| | | | **TECHNICAL FIELDS SEARCHED (Int.Cl.6)** |
| A | SOHAIL ZAFAR ET AL: "PREDICTIVE BLOCK-MATCHING MOTION ESTIMATION SCHEMES FOR VIDEO COMPRESSION PART I INTER-BLOCK PREDICTION" PROCEEDINGS OF SOUTHEASTCON, WILLIAMSBURG, APR. 7 - 10, 1991, vol. VOL. 2, no. -, 1 January 1991, INSTITUTE OF ELECTRICAL AND ELECTRONICS ENGINEERS, pages 1088-1092, XP000287098 * paragraph 3 * | 1-5 | H04N G06T |

-/--

The present search report has been drawn up for all claims

| Place of search | Date of completion of the search | Examiner |
|---|---|---|
| THE HAGUE | 20 April 1998 | Berbain, F |

**European Patent Office**

## EUROPEAN SEARCH REPORT

Application Number

EP 97 83 0605

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | YA-QIN ZHANG ET AL: "PREDICTIVE BLOCK-MATCHING MOTION ESTIMATION SCHEMES FOR VIDEO COMPRESSION -- PART II INTER-FRAME PREDICTION OF MOTION VECTORS" PROCEEDINGS OF SOUTHEASTCON, WILLIAMSBURG, APR. 7 - 10, 1991, vol. VOL. 2, no. -, 1 January 1991, INSTITUTE OF ELECTRICAL AND ELECTRONICS ENGINEERS, pages 1093-1095, XP000287099 * paragraph 2 * --- | 1-5 | |
| A | GB 2 307 135 A (DAE WOO ELECTRONICS CO LTD) 14 May 1997 * claims 4-7; figures 2,4 * ----- | 1-5 | |
| | | | **TECHNICAL FIELDS SEARCHED** (Int.Cl.6) |

The present search report has been drawn up for all claims

| Place of search | Date of completion of the search | Examiner |
|---|---|---|
| THE HAGUE | 20 April 1998 | Berbain, F |

EPO FORM 1503 03.82 (P04C01)